(19) **Europäisches Patentamt / European Patent Office / Office européen des brevets**

(11) **EP 4 155 362 A1**

(12) # EUROPEAN PATENT APPLICATION

(43) Date of publication:
**29.03.2023 Bulletin 2023/13**

(21) Application number: **22196974.4**

(22) Date of filing: **21.09.2022**

(51) International Patent Classification (IPC):
**C09K 3/10** (2006.01)   **C09J 133/06** (2006.01)
**C08K 7/28** (2006.01)   **C08K 7/20** (2006.01)

(52) Cooperative Patent Classification (CPC):
(C-Sets available)
**C09K 3/1006; C09J 133/06;** C08K 7/20; C08K 7/28;
C08L 2205/20; C09K 2200/0243; C09K 2200/0625

(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.09.2021 US 202163247089 P**

(71) Applicant: **Dap Products Inc.**
**Baltimore, MD 21224 (US)**

(72) Inventors:
• **GLASS, Richard**
  **Baltimore, Maryland, 21224 (US)**
• **FISANICH, Tabitha**
  **Baltimore, Maryland, 21224 (US)**

(74) Representative: **Meroni, Francesca et al**
**Jacobacci & Partners S.p.A.**
**Via Senato, 8**
**20121 Milano (IT)**

(54) ## LOW-SHRINKAGE SEALANT COMPOSITIONS

(57) Described herein are sealant compositions with low shrinking volume. The sealant compositions include a glass filler. The sealant compositions are useful in a variety of building and construction applications, as well as interior or exterior trim work applications.

**FIG. 1A**

EP 4 155 362 A1

(52) Cooperative Patent Classification (CPC): (Cont.)

C-Sets
**C09J 133/06, C08K 7/20;**
**C09J 133/06, C08K 7/28**

**Description**

**RELATED APPLICATIONS**

This application claims priority to U.S. Provisional Application Serial No. 63/247,089, filed on September 22, 2021, the contents of which are hereby incorporated by reference in their entirety.

**FIELD OF DISCLOSURE**

This disclosure is directed to sealant compositions with low shrinking volume. The sealant compositions include a glass filler. The sealant compositions are useful in a variety of building and construction applications, as well as interior or exterior trim work applications.

**BACKGROUND**

Sealant compositions, including latex sealants, often exhibit significant shrinkage. However, low shrinkage is desirable, particularly among professional painters. Shrinkage can present substantial problems. For example, when filling gaps or bridging joints in trim work, cracking or pulling away from edges commonly occurs after sealant cures fully and shrinks down, especially when too little sealant is applied, requiring a second application before painting.

Further, paint film cracking can occur when sealants with high volume shrinkage are painted too soon or with poor quality paint. This is because cracking of paint often results from application of paint at a time when the sealant is only just skinned over (tack-free) and well before beginning to shrink from drying beyond the surface. Many paints used in these situations dry to a non-flexible film while the sealant itself is still drying underneath and slowly shrinking towards its final volume loss from evaporation of volatile components.

Moreover, high shrinkage sealants, such as conventional sealants exhibiting 30-35% volume shrinkage, produce a large gap upon sealing. Often, insertion of backer rods in wide joints before sealant is applied is required because the sealant cannot fill the gap in a single application.

Attempted solutions to address the above problems have failed. For example, attempted solutions have resulted in compositions that have a very low product density (e.g. 5 lbs/gal in US 4,388,424). Such low product density compromises adhesion to various substrates, which would necessitate physically forcing or tooling product onto a surface or into a joint to ensure acceptable bonding in most situations. These attempted solutions also present issues with fragility of the sealant compositions. For at least these reasons, the past solutions are unacceptable.

The present disclosure provides sealant compositions with low shrinking volume that overcome these challenges.

**BRIEF DESCRIPTION OF THE DISCLOSURE**

In one aspect, provided herein is a sealant composition comprising a sealant binder composition, a glass filler, and optionally a plastic filler.

In another aspect, provided herein is a method of making a sealant composition comprising a sealant binder composition, a glass filler, and optionally a plastic filler, wherein the method comprises (i) forming a mixture comprising the sealant binder composition, the glass filler, and optionally the plastic filler; and (ii) mixing the mixture.

In yet another aspect, provided herein is a method of using a sealant composition comprising a sealant binder composition, a glass filler, and optionally a plastic filler, wherein the method comprises applying the sealant composition to a work surface.

**BRIEF DESCRIPTION OF THE DRAWINGS**

**Figure 1A** is a graphical depiction of an exemplary embodiment of the observed volume shrinkage for a sealant composition in accordance with the present disclosure (left) relative to standard caulk and sealant formulations (right) cured out in ½" wide x ¼" deep channels, (10% vs 30-35% shrinkage).

**Figure 1B** is a graphical depiction of an exemplary embodiment of the observed volume shrinkage for a sealant composition in accordance with the present disclosure (left) relative to standard caulk and sealant formulations (right) cured out in ½" wide x ¼" deep channels, (10% vs 30-35% shrinkage).

**Figure 1C** is a graphical depiction of an exemplary embodiment of the early paint-ability for a sealant composition in accordance with the present disclosure at 10 minutes dry time, with no paint cracking or glossing.

**Figure 2** is a graphical depiction of an exemplary embodiment of the channel method for a volume shrinkage test in accordance with the present disclosure.

**Figure 3A** is a representative depiction of an exemplary embodiment of the petri dish method for a volume shrinkage test in accordance with the present disclosure.

**Figure 3B** is a graphical depiction of an exemplary embodiment of the calibration of a petri dish for a volume shrinkage test in accordance with the present disclosure.

**Figure 3C** is a graphical depiction of an exemplary embodiment of water over a cured sealant for a volume shrinkage test in accordance with the present disclosure.

**Figure 3D** is a graphical depiction of an exemplary embodiment of water filling space between sealant and the glass plate for a volume shrinkage test in accordance with the present disclosure.

**Figure 4A** is a graphical depiction of an exemplary embodiment of a test method for determining low temperature flexibility after artificial weathering of latex sealants in accordance with ASTM C734, as applied to a comparative composition. This composition failed the test.

**Figure 4B** is a graphical depiction of an exemplary embodiment of a test method for determining low temperature flexibility after artificial weathering of latex sealants in accordance with ASTM C734, as applied to a composition in accordance with the present disclosure. This composition passed the test.

**Figure 5A** is a graphical depiction of an exemplary embodiment of a test method for extension-recovery and adhesion of latex sealants in accordance with ASTM C736, as applied to a composition in accordance with the present disclosure.

**Figure 5B** is a graphical depiction of an exemplary embodiment of a test method for extension-recovery and adhesion of latex sealants in accordance with ASTM C736, as applied to a comparative composition.

**Figure 5C** is a graphical depiction of an exemplary embodiment of a test method for extension-recovery and adhesion of latex sealants in accordance with ASTM C736, as applied to a composition in accordance with the present disclosure.

**Figure 5D** is a graphical depiction of an exemplary embodiment of a test method for extension-recovery and adhesion of latex sealants in accordance with ASTM C736, as applied to a comparative composition.

**Figure 5E** is a graphical depiction of an exemplary embodiment of a test method for extension-recovery and adhesion of latex sealants in accordance with ASTM C736, as applied to a comparative composition.

**Figure 5F** is a graphical depiction of an exemplary embodiment of a test method for extension-recovery and adhesion of latex sealants in accordance with ASTM C736, as applied to a composition in accordance with the present disclosure.

**Figure 6A** is a graphical depiction of an exemplary embodiment of a test method for tensile properties of elastomers in accordance with ASTM D-412, as applied to a composition in accordance with the present disclosure. This composition passed the test.

**Figure 6B** is a graphical depiction of an exemplary embodiment of the results of a test method for tensile properties of elastomers in accordance with ASTM D-412, as applied to comparative compositions and compositions in accordance with the present disclosure. The figure labels indicate which compositions passed the test.

## DETAILED DESCRIPTION OF THE DISCLOSURE

Sealant compositions in accordance with the present disclosure exhibit low shrinkage volume. The present compositions maximize total volume solids and minimize volatile components to affect as much as possible a reduction of volume shrinkage in the dry /fully cured state. This outcome is accomplished through the combination of a hollow glass filler and a plastic filler included within the matrix of the sealant binder system. In the cured state, compositions in accordance with the present disclosure provide enough polymer volume concentration to give the sealant enough rubbery-elastic extension and recovery qualities needed for passing the ASTM C834 standard.

In many embodiments, the sealant compositions are water-based. In many embodiments, the sealant compositions comprise a latex sealant binder.

In some embodiments, the sealant binder system comprises a sealant polymer. In some embodiments, the sealant binder system comprises a latex sealant. In some embodiments, the sealant binder system comprises a high solids acrylic latex polymer. In some embodiments, the sealant binder system comprises a liquid non-volatile plasticizer.

In some embodiments, the sealant binder system comprises a sealant polymer in the form of a polymer emulsion. In some embodiments, the sealant binder system comprises an acrylic latex polymer in the form of an acrylic polymer emulsion or vinyl-acrylic copolymer emulsion.

In some embodiments, the sealant binder system comprises at least two sealant polymers. In some embodiments, the sealant binder system comprises three or more sealant polymers.

In some embodiments, the sealant binder system comprises a first sealant polymer having a first $T_g$ temperature and a second sealant polymer having a second $T_g$ temperature, wherein the first $T_g$ temperature is less than the second $T_g$ temperature.

In some embodiments, the sealant binder system comprises a first sealant polymer having a first $T_g$ temperature less than about -10 °C. In some embodiments, the sealant binder system comprises a first sealant polymer having a first $T_g$ temperature less than about -15 °C. In some embodiments, the sealant binder system comprises a first sealant polymer having a first $T_g$ temperature less than about -20 °C. In some embodiments, the sealant binder system comprises a first sealant polymer having a first $T_g$ temperature less than about -25 °C. In some embodiments, the sealant binder system comprises a first sealant polymer having a first $T_g$ temperature less than about -30 °C. In some embodiments, the sealant binder system comprises a first sealant polymer having a first $T_g$ temperature less than about -35 °C. In some embodiments, the sealant binder system comprises a first sealant polymer having a first $T_g$ temperature less than about -40 °C. In some embodiments, the sealant binder system comprises a first sealant polymer having a first $T_g$ temperature less than about -45 °C.

In some embodiments, the sealant binder system comprises a second sealant polymer having a second $T_g$ temperature greater than about -45 °C. In some embodiments, the sealant binder system comprises a second sealant polymer having a second $T_g$ temperature greater than about -40 °C. In some embodiments, the sealant binder system comprises a second sealant polymer having a second $T_g$ temperature greater than about -35 °C. In some embodiments, the sealant binder system comprises a second sealant polymer having a second $T_g$ temperature greater than about -30 °C. In some embodiments, the sealant binder system comprises a second sealant polymer having a second $T_g$ temperature greater than about -25 °C. In some embodiments, the sealant binder system comprises a second sealant polymer having a second $T_g$ temperature greater than about -20 °C. In some embodiments, the sealant binder system comprises a second sealant polymer having a second $T_g$ temperature greater than about - 15 °C. In some embodiments, the sealant binder system comprises a second sealant polymer having a second $T_g$ temperature greater than about -10 °C. In some embodiments, the sealant binder system comprises a second sealant polymer having a second $T_g$ temperature greater than about -5 °C. In some embodiments, the sealant binder system comprises a second sealant polymer having a second $T_g$ temperature greater than about 0 °C.

In some preferred embodiments, the preferred polymer system of the sealant binder system is (1) a high solids acrylic latex, with a $T_g$ temperature where, in typical sealant formulations (depending on filler load), it would not necessarily require added plasticizer to meet an ASTM C834 specification; and (2) a lower percentage of higher $T_g$ temperature latex (not as soft) with self-thickening properties and accepting of a relatively higher loading of plasticizer without becoming too tacky. A certain plasticizer chemistry is also important in that it should not swell the polymer particles but act as somewhat of a diluent, thereby reducing base viscosity before any thickening agent is added at the end of the process to adjust for extrusion rate or resistance to slump.

In some embodiments, at least one of the hollow glass filler and the plastic filler is in the form of a shape selected from the group consisting of spheres, spheroids, other shapes with a low surface area to volume ratio, and combinations thereof. In some preferred embodiments, at least one of the hollow glass filler and the plastic filler is in the form of a sphere. Since a sphere has the lowest surface area to volume ratio, packing of spherical particles is more efficient and requires the least amount of binder to "wet out" the spherical filler surface per unit internal volume. This allows for very high-volume percent loading of spherical filler in the formulation while still giving excellent application and tooling characteristics.

In many embodiments, at least one of the hollow glass filler and the plastic filler is low density. In many embodiments, at least one of the hollow glass filler and the plastic filler is hollow.

In some embodiments, the hollow glass filler has a crush strength of at least 1000 psi. In some embodiments, the hollow glass filler has a crush strength of at least 1500 psi. In some embodiments, the hollow glass filler has a crush strength of at least 2000 psi. In some embodiments, the hollow glass filler has a crush strength of at least 2500 psi. In some embodiments, the hollow glass filler has a crush strength of at least 3000 psi. In some embodiments, the hollow glass filler has a crush strength of at least 3500 psi. In some embodiments, the hollow glass filler has a crush strength of at least 4000 psi. In some embodiments, the hollow glass filler has a crush strength of at least 4500 psi. In some embodiments, the hollow glass filler has a crush strength of at least 5000 psi. In some embodiments, the hollow glass filler has a crush strength of at least 5500 psi. In some embodiments, the hollow glass filler has a crush strength of at least 6000 psi.

In some embodiments, the hollow glass filler has an average particle diameter greater than about 10 nm. In some embodiments, the hollow glass filler has an average particle diameter less than about 100 nm. In some embodiments, the hollow glass filler has an average particle diameter less than about 50 nm. In some embodiments, the hollow glass filler has an average particle diameter of about 40 nm. In some embodiments, the hollow glass filler has an average particle diameter of about 30 nm. In some embodiments, the hollow glass filler has an average particle diameter of about 25 nm.

In some embodiments, the hollow glass filler has a density less than about 0.50 g/cc. In some embodiments, the hollow glass filler has a density less than about 0.45 g/cc. In some embodiments, the hollow glass filler has a density less than about 0.40 g/cc. In some embodiments, the hollow glass filler has a density less than about 0.35 g/cc. In some embodiments, the hollow glass filler has a density less than about 0.30 g/cc.

In some embodiments, the plastic filler has an average particle diameter greater than about 10 nm. In some embodiments, the plastic filler has an average particle diameter less than about 200 nm. In some embodiments, the plastic filler has an average particle diameter less than about 150 nm. In some embodiments, the plastic filler has an average particle diameter of about 135 nm. In some embodiments, the plastic filler has an average particle diameter less than about 100 nm. In some embodiments, the plastic filler has an average particle diameter of about 95 nm.

In some embodiments, the plastic filler has a density less than about 0.150 g/cc. In some embodiments, the plastic filler has a density less than about 0.140 g/cc. In some embodiments, the plastic filler has a density less than about 0.130 g/cc. In some embodiments, the plastic filler has a density less than about 0.120 g/cc. In some embodiments, the plastic filler has a density less than about 0.110 g/cc. In some embodiments, the plastic filler has a density less than about 0.100 g/cc. In some embodiments, the plastic filler has a density less than about 0.090 g/cc. In some embodiments, the plastic filler has a density less than about 0.080 g/cc. In some embodiments, the plastic filler has a density less than about 0.070 g/cc.

In some embodiments, the combination of low-density hollow glass spheres and hollow (very low density) plastic spheres is critical in the relationship between average particle size and wall thickness. This combination provides a desirable average compressive strength that resists breakage in processing/mixing equipment under sheer stress from mixing blades, pumping, etc. As the most efficient space filling of the sealant within the binder requires ideally a high percentage of near perfect spheres, any crushed, compressed or partially broken spheres take away from the intended reduction of volume shrinkage and at some level will negatively affect elongation properties necessary to resist joint movement in service.

In some embodiments, the sealant composition further comprises an additional filler. In some embodiments, the addition filler is a non-spherical mineral based filler. Non-spherical mineral based fillers may provide internal structure helpful for building tensile strength.

Generally, the sealant composition may comprise any suitable sealant composition auxiliary component known in the art. In some embodiments, the sealant composition further comprises an auxiliary component selected from the group consisting of rheological additives, organic thickening agents, inorganic thickening agents, adhesion promoters, pigments, dispersants, pigment dispersants, filler dispersants, detergents, non-ionic detergents, cationic detergents, anionic detergents, surfactants, non-ionic surfactants, cationic surfactants, anionic surfactants, biocides, mildew growth inhibitors, plasticizers, oils, process oils, freeze-thaw additives, volatile freeze-thaw additives, non-volatile freeze-thaw additives, pH modifiers, volatile pH modifiers, non-volatile pH modifiers, buffers, and combinations thereof.

In some embodiments, the sealant composition comprises a plasticizer. In some embodiments, the sealant composition comprises a non-volatile plasticizer. In some embodiments, the sealant composition comprises a non-phthalate plasticizer. In some embodiments, the sealant composition comprises a plasticizer selected from the group consisting of benzoates, dibenzoates, dipropylene glycol dibenzoate, diethylene glycol dibenzoate, and combinations thereof.

In some embodiments, the sealant composition is prepared according to a method comprising (i) forming a mixture comprising the sealant binder composition, the glass filler, and optionally the plastic filler; and (ii) mixing the mixture.

In some embodiments, the sealant composition is used according to a method comprising applying the sealant composition to a work surface.

In some embodiments, the work surface is selected from the group consisting of a surface in a building and/or construction application, a surface in an interior trim work application, a wall, a floor, a ceiling, a door, a window, a gap therebetween, and combinations thereof.

In some embodiments, the work surface comprises a material selected from the group consisting of glass, ceramic tile, porcelain tile, ceramic and porcelain tile, concrete, aluminum, plastic, polyvinyl chloride (PVC), wood, drywall, and combinations thereof.

In some embodiments, the sealant composition is tested according to a method selected from the group consisting of a volume shrinkage test, a channel volume shrinkage test in accordance with the present disclosure, a petri dish volume shrinkage test in accordance with the present disclosure, ASTM C-834, ASTM C732, ASTM C734, ASTM C736, ASTM C1183, ASTM C1241, ASTM D2202, ASTM D2203, ASTM D2377, ASTM D-412, and combinations thereof.

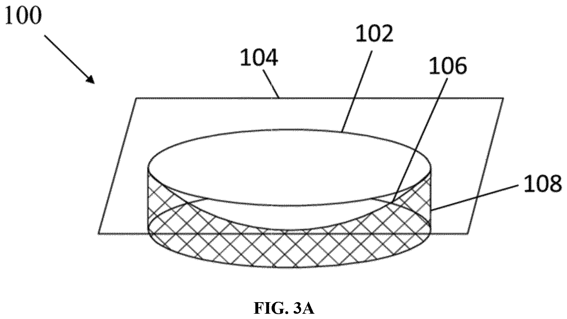

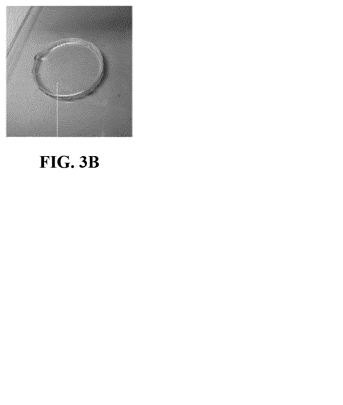

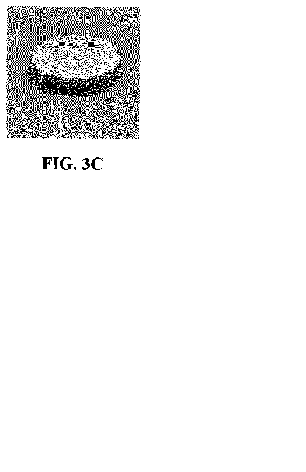

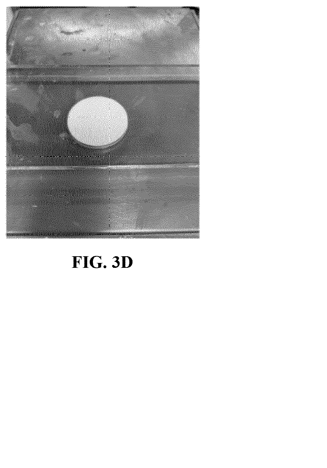

Figure 3A depicts a tested composition 100 tested according to the petri dish method. A glass slide 104 is placed on top of a petri dish 102. DI water is filled into the depression up to the underside of the glass plate 106. The cured sealant 108 is shown in the area expressed by hash marks.

In some embodiments, a sealant composition in accordance with the present disclosure is a 10-minute paint ready (with 5 minutes for skin time for tooling), low-shrink latex sealant at roughly 84% volume solids. The maximum theoretical shrinkage is 16% at most due simply to loss of volatile components. However, the actual observed shrinkage is less due to internal packing arrangements of primarily the spherical fillers. These arrangements, combined with a relatively rapid dry time, leaves small voids where water or other low-level volatile material escaped from within the wet sealant. These tiny air pockets further lower the dried product density and contribute to between 3-5% less shrinkage under the fully cured theoretical percentage (depending on test method utilized).

In some embodiments, the sealant composition exhibits a volume shrinkage less than about 35% upon drying. In some embodiments, the sealant composition exhibits a volume shrinkage less than about 34% upon drying. In some embodiments, the sealant composition exhibits a volume shrinkage less than about 33% upon drying. In some embodiments, the sealant composition exhibits a volume shrinkage less than about 32% upon drying. In some embodiments, the sealant composition exhibits a volume shrinkage less than about 31% upon drying. In some embodiments, the sealant composition exhibits a volume shrinkage less than about 30% upon drying. In some embodiments, the sealant composition exhibits a volume shrinkage less than about 29% upon drying. In some embodiments, the sealant composition exhibits a volume shrinkage less than about 28% upon drying. In some embodiments, the sealant composition exhibits a volume shrinkage less than about 27% upon drying. In some embodiments, the sealant composition exhibits a volume shrinkage less than about 26% upon drying. In some embodiments, the sealant composition exhibits a volume shrinkage less than about 25% upon drying. In some embodiments, the sealant composition exhibits a volume shrinkage less than about 24% upon drying. In some embodiments, the sealant composition exhibits a volume shrinkage less than about 23% upon drying. In some embodiments, the sealant composition exhibits a volume shrinkage less than about 22% upon drying. In some embodiments, the sealant composition exhibits a volume shrinkage less than about 21% upon drying. In some embodiments, the sealant composition exhibits a volume shrinkage less than about 20% upon drying. In some embodiments, the sealant composition exhibits a volume shrinkage less than about 19% upon drying. In some embodiments, the sealant composition exhibits a volume shrinkage less than about 18% upon drying. In some embodiments, the sealant composition exhibits a volume shrinkage less than about 17% upon drying. In some embodiments, the sealant composition exhibits a volume shrinkage less than about 16% upon drying. In some embodiments, the sealant composition exhibits a volume shrinkage less than about 15% upon drying. In some embodiments, the sealant composition exhibits a volume shrinkage less than about 14% upon drying. In some embodiments, the sealant composition exhibits a volume shrinkage less than about 13% upon drying. In some embodiments, the sealant composition exhibits a volume shrinkage less than about 12% upon drying. In some embodiments, the sealant composition exhibits a volume shrinkage less than about 11% upon drying. In some embodiments, the sealant composition exhibits a volume shrinkage less than about 10% upon drying.

In some preferred embodiments, the sealant composition exhibits a shrinkage less than about 15% upon drying. In some preferred embodiments, the sealant composition exhibits a shrinkage less than about 10% upon drying.

The lower density of sealant compositions in accordance with the present disclosure, relative to conventional sealants without hollow/lightweight fillers, presented a challenge for meeting the ASTM C834 testing protocols, the standard for latex sealants used by building construction contractors and painting trades. A sealant composition in accordance with the present disclosure is particularly relevant due to the volume shrink max requirement within the C834 specification.

Embodiments of the present disclosure include:

Embodiment 1. A sealant composition comprising:

a sealant binder composition;

a glass filler; and

optionally a plastic filler.

Embodiment 2. The sealant composition of Embodiment 1, wherein the sealant binder composition comprises a first sealant polymer having a first $T_g$ temperature and a second sealant polymer having a second $T_g$ temperature, wherein the first $T_g$ temperature is less than the second $T_g$ temperature.

Embodiment 3. The sealant composition of Embodiment 1, wherein the sealant binder composition comprises a latex polymer and optionally a non-volatile plasticizer.

Embodiment 4. The sealant composition of Embodiment 1, wherein the glass filler is in the form of glass spheres.

Embodiment 5. The sealant composition of Embodiment 1, wherein the glass filler is a hollow glass filler.

Embodiment 6. The sealant composition of Embodiment 1, wherein the plastic filler is in the form of plastic spheres.

Embodiment 7. The sealant composition of Embodiment 1, wherein the plastic filler is a hollow plastic filler.

Embodiment 8. The sealant composition of Embodiment 1, wherein the sealant composition further comprises a mineral filler.

Embodiment 9. The sealant composition of Embodiment 1, wherein the sealant composition further comprises an auxiliary component selected from the group consisting of rheological additives, organic thickening agents, inorganic thickening agents, adhesion promoters, pigments, dispersants, pigment dispersants, filler dispersants, detergents, non-ionic detergents, cationic detergents, anionic detergents, surfactants, non-ionic surfactants, cationic surfactants, anionic surfactants, biocides, mildew growth inhibitors, plasticizers, oils, process oils, freeze-thaw additives, volatile freeze-thaw additives, non-volatile freeze-thaw additives, pH modifiers, volatile pH modifiers, non-volatile pH modifiers, buffers, and combinations thereof.

Embodiment 10. The sealant composition of Embodiment 1, wherein the sealant composition exhibits a volume shrinkage less than about 30% upon drying.

Embodiment 11. A method of making a sealant composition comprising:

a sealant binder composition;

a glass filler; and

optionally a plastic filler,

wherein the method comprises

forming a mixture comprising the sealant binder composition, the glass filler, and optionally the plastic filler; and

mixing the mixture.

Embodiment 12. The method of Embodiment 11, wherein the sealant binder composition comprises a first sealant polymer having a first $T_g$ temperature and a second sealant polymer having a second $T_g$ temperature, wherein the first $T_g$ temperature is less than the second $T_g$ temperature.

Embodiment 13. The method of Embodiment 11, wherein the sealant composition further comprises an auxiliary component selected from the group consisting of rheological additives, organic thickening agents, inorganic thickening agents, adhesion promoters, pigments, dispersants, pigment dispersants, filler dispersants, detergents, non-ionic detergents, cationic detergents, anionic detergents, surfactants, non-ionic surfactants, cationic surfactants, anionic surfactants, biocides, mildew growth inhibitors, plasticizers, oils, process oils, freeze-thaw additives, volatile freeze-thaw additives, non-volatile freeze-thaw additives, pH modifiers, volatile pH modifiers, non-volatile pH modifiers, buffers, and combinations thereof.

Embodiment 14. The method of Embodiment 11, wherein the sealant composition exhibits a volume shrinkage less than about 30% upon drying.

Embodiment 15. A method of using a sealant composition comprising:

a sealant binder composition;

a glass filler; and

optionally a plastic filler,

wherein the method comprises applying the sealant composition to a work surface.

Embodiment 16. The method of Embodiment 15, wherein the work surface is selected from the group consisting of a surface in a building and/or construction application, a surface in an interior trim work application, a wall, a floor, a ceiling, a door, a window, a gap therebetween, and combinations thereof.

Embodiment 17. The method of Embodiment 15, wherein the work surface comprises a material selected from the group consisting of glass, ceramic tile, porcelain tile, ceramic and porcelain tile, concrete, aluminum, plastic, polyvinyl chloride (PVC), wood, drywall, and combinations thereof.

Embodiment 18. The method of Embodiment 15, wherein the sealant binder composition comprises a first sealant polymer having a first $T_g$ temperature and a second sealant polymer having a second $T_g$ temperature, wherein the first $T_g$ temperature is less than the second $T_g$ temperature.

Embodiment 19. The method of Embodiment 15, wherein the sealant composition further comprises an auxiliary component selected from the group consisting of rheological additives, organic thickening agents, inorganic thickening agents, adhesion promoters, pigments, dispersants, pigment dispersants, filler dispersants, detergents, non-ionic detergents, cationic detergents, anionic detergents, surfactants, non-ionic surfactants, cationic surfactants, anionic surfactants, biocides, mildew growth inhibitors, plasticizers, oils, process oils, freeze-thaw additives, volatile freeze-thaw additives, non-volatile freeze-thaw additives, pH modifiers, volatile pH modifiers, non-volatile pH modifiers, buffers, and combinations thereof.

Embodiment 20. The method of Embodiment 15, wherein the sealant composition exhibits a volume shrinkage less than about 30% upon drying.

## EXAMPLES

Without further elaboration, it is believed that one skilled in the art using the preceding description can utilize the present invention to its fullest extent. The following Examples are, therefore, to be construed as merely illustrative, and not limiting of the disclosure in any way whatsoever.

**Example** 1. Inventive Compositions.

The following compositions are select inventive compositions in accordance with the present disclosure.

Table 1. Select inventive compositions.

| Component Name | Component Description | Formulation | | | |
|---|---|---|---|---|---|
| | | 2,000 psi hollow spheres 80% survival (wt%) | 3,000 psi hollow spheres 90% survival (wt%) | 2,000 psi hollow spheres 80% survival (vol%) | 3,000 psi hollow spheres 90% survival (vol%) |
| VICRON 45-3 bulk | Mineral Filler (7-10 um avg part. size) | 44.01 | 44.39 | 17.94 | 17.12 |
| No. 8 White | Mineral Filler (avg part. size > 18 um) | 0- 44.01 | 0-44.39 | 0- 17.94 | 0- 17.12 |

(continued)

| Component Name | Component Description | Formulation | | | |
|---|---|---|---|---|---|
| | | 2,000 psi hollow spheres 80% survival (wt%) | 3,000 psi hollow spheres 90% survival (wt%) | 2,000 psi hollow spheres 80% survival (vol%) | 3,000 psi hollow spheres 90% survival (vol%) |
| Paragum 500 | Rheological additive, pH activated | 0.06 | 0.03 | 0.06 | 0.03 |
| Silane A-1100/KBE 903/JH A110 | Adhesion promotor, amino Silane | 0.22 | 0.20 | 0.26 | 0.23 |
| A-187 SILANE/ KBM 403 | Adhesion promotor, epoxy Silane | 0.22 | 0.20 | 0.26 | 0.23 |
| Tamol 851/Coadis 173 | Pigment/filler dispersant | 0.33 | 0.32 | 0.30 | 0.28 |
| Tergitol NP-10 | Non-ionic detergent (HLB 10-20) | 0- 0.29 | 0- 0.29 | 0- 0.31 | 0- 0.31 |
| Tergitol 15-S-40 (70%) | Non-ionic detergent (HLB 10-20) | 0.32 | 0.32 | 0.32 | 0.32 |
| AMP 95 | Auxiliary pigment dispersant & pH stabilizer | 0.09 | 0.09 | 0.11 | 0.09 |
| Surfynol 104E | Non-ionic surfactant and foam control | 0.09 | 0.09 | 0.10 | 0.10 |
| Polyphase SA27 | Biocide/ Mildew growth inhibitor | 0 - 0.07 | 0 - 0.07 | 0 - 0.08 | 0 - 0.08 |
| Acticide MKW2 | Biocide/ Mildew growth inhibitor | 0.08 | 0.08 | 0.07 | 0.07 |
| Rhoplex 4400 Emulsion | Acrylic Polymer emulsion, $T_g$ -43C | 33.93 | 34.15 | 36.03 | 34.31 |
| Primal 2620 Emulsion | Acrylic Polymer emulsion, $T_g$ -34C | 0- 33.93 | 0- 34.15 | 0- 36.03 | 0- 34.31 |
| Rhoplex 3805 Emulsion | Acrylic Polymer emulsion, $T_g$ -13C | 0 | 0-17 | 0 | 0-17 |
| PURITY 1020 Base Oil | Process oil (lubricant/ shrink resistance) | 3.12 | 3.16 | 3.98 | 3.81 |
| K-Flex 850P | non-Phthalate plasticizer, higher visc. (polymer softening/shrink resist.) | 1.47 | 1.54 - 7.60 | 1.41 | 1.39 -7.31 |
| Santicizer Platinum P-1400 | non-Phthalate plasticizer, low visc (polymer softening/shrink resist.) | 6.05 | 0 - 6.06 | 6.25 | 0 - 5.92 |

(continued)

| Component Name | Component Description | Formulation | | | |
|---|---|---|---|---|---|
| | | 2,000 psi hollow spheres 80% survival (wt%) | 3,000 psi hollow spheres 90% survival (wt%) | 2,000 psi hollow spheres 80% survival (vol%) | 3,000 psi hollow spheres 90% survival (vol%) |
| 3M S32 Glass Bubbles | Hollow glass sphere, 0.32 g/cc, 2000psi crush str | 9.35 | 0 | 32.22 | 0 |
| 3M Glass Bubbles S35 | Hollow glass sphere, 0.35 g/cc, 3000psi crush str | 9.96 | 9.96 | 32.20 | 32.20 |
| 3M Glass Bubbles S-28HS | Hollow glass sphere, 0.28 g/cc, 3000psi crush str | 0 | 8.66 | 0 | 32.31 |
| 3M Glass Bubbles S-32 HS | Hollow glass sphere, 0.32 g/cc, 6000psi crush str | 9.35 | 9.35 | 32.20 | 32.20 |
| Dualite E065-135D | Polymeric (flex. plastic) hollow microsphere (0.065 g/cc) | 0-0.21 | 0.21 | 0 - 3.33 | 3.33 |
| Dualite E130-095D | High strength polymeric hollow microsphere (0.130 g/cc) | 0 - 0.56 | 0.56 | 0-4.52 | 4.52 |
| Ethylene Glycol | Freeze-Thaw additive (volatile) | 0.62 | 0.53 | 0.62 | 0.50 |
| E-Sperse FT-600 | Freeze-Thaw additive (non-volatile) | 0.07 | 0 | 0.07 | 0 |
| Aqua Ammonia | pH modifier (volatile) | 0.22 | 0.17 | 0.27 | 0.20 |

**Example 2.** Measurements in accordance with an ASTM C834 observation for an ASTM C1241 volume shrinkage test.

An ASTM C834 observation was made for an ASTM C1241 volume shrinkage test because ASTM C1241 is not a method for measuring actual observed shrinkage of a sealant within a gap.

This method utilizes a sample weight % solids of fully cured sealant and tested density of fresh (wet) sealant.

Example Calculations:

$$[\text{sealant density (lbs/gal)} / \text{density of water (lbs/gal)}] \times [100 - \text{Wt Solids \%} / \text{density of water at 23C (g/ml)}]$$

$$[8.11 / 8.328] \times [(100 - 0.8627) / 0.9976)] = 13.4\% \text{ volume shrinkage}$$

Low-shrink sealant compositions in accordance with the present disclosure generally range from 13- 14% volume shrinkage, calculated as above. In contrast, comparative conventional painter's grade latex sealants range between 26 - 29% volume shrinkage, calculated as above.

Notably, this method does not take into account any internal/ structural resistance to shrinkage inherent to the formulation resulting from spherical filler packing arrangements.

**Example 3.** Alternative channel measurements for a volume shrinkage test.

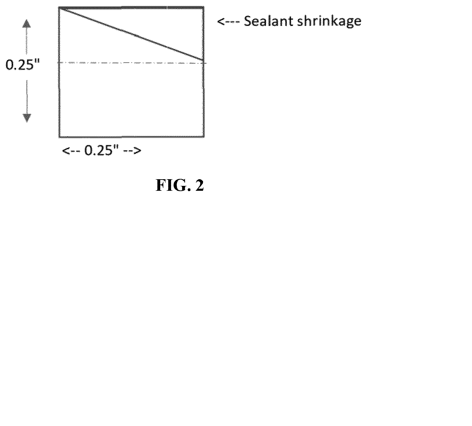

In addition, an alternative shrinkage test method was developed. A demonstration of the test method is shown in Figure 2.

In this method, a physical measurement (using a micrometer or tire tread depth gauge) was made of sinking of sealant below the surface of wooden channels 0.25" deep, 0.5" wide by 5" in length. This method quantitatively characterizes visual observations in the channel after the sealant fully cures.

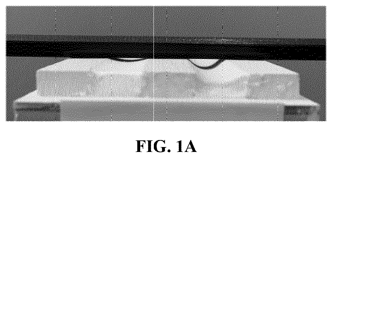

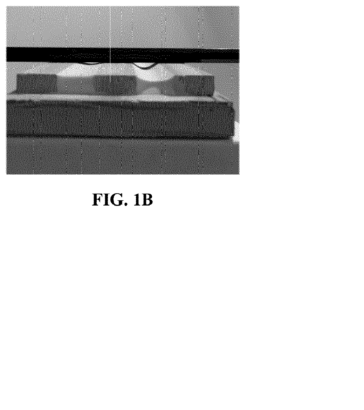

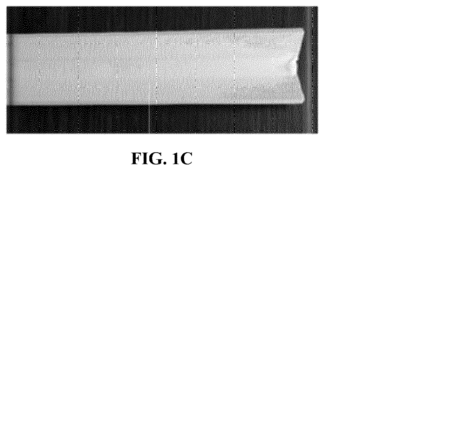

Measurements made with this test method are shown in Figures 1A-1C. Figure 1A and Figure 1B each show the shrinkage of the same sample. Figure 1C shows an early painting test on a corner wooden trim, with painting beginning at 10 minutes dry time.

Example Calculations:

$$((1.6 \text{ mm} \times 0.03937) \times 0.25") / (0.5" \times 0.25") \times 100 = 12.6\% \text{ volume shrinkage}$$

Low-shrink sealant compositions in accordance with the present disclosure generally range from 12- 13% volume shrinkage, calculated as above. In contrast, comparative conventional latex sealants range between 25 - 28% volume shrinkage, calculated as above.

Notably, this method does take into account internal/structural resistance to shrinkage inherent to the formulation resulting from spherical filler packing arrangements.

**Example 4.** Alternative petri dish measurements for a volume shrinkage test.

In addition, an alternative shrinkage test method was developed. A demonstration of the test method is shown in Figures 3A-3D.

The method is generally described as follows. The test method is based on displacement of water by cured sealant within a known (pre-calibrated) petri dish volume. First, the weight and/or volume of the petri dish is calibrated with water. Second, the sealant sample cures, thereby shrinking down into the petri dish. Third, water is placed over the cured sealant before a glass plate is applied. Fourth, the water under the glass plate (no air bubbles) fills the void above the sealant and top of the petri dish. The system is then weighed to calculate volume loss.

The method is specifically described as follows. Sealant of known wet density is filled into a pre-weighed plastic petri dish (e.g. roughly 3.5 cm diameter x 1 cm deep) and the weight of wet sealant filled into the dish is recorded. Before filling dish with sealant, the dish is calibrated by filling with deionized water. A glass plate is placed on top to confine the water to the full volume of the dish, avoid any bubbles and remove excess spilled water from the balance. The weight is recorded within 0.01g. The sealant should be filled to 80-90% "full" (avoiding air pockets) inside the dish but flush with surface is not necessary. The sealant in the dish is allowed to cure and shrink down further inside the dish for 2 weeks minimum or accelerated in a drying oven at 50C for 5 days. After the necessary drying time, the sealant and dish are weighed on a balance (at least to the nearest 0.01g). From the original weight of the empty dish subtracted from the total dish + dried sample weight, a % solids of the sealant can be calculated to verify proper dry time.

The % solids can be used to calculate volume theoretical volume shrinkage as in the ASTM C1241 test (though a petri dish is not used in the method as written). After recording the weight of the dish + dried sealant, this is re-weighed a smooth glass plate is placed on the same balance together, and the balance is zeroed out. Deionized water with approximate density of 1 g/cc at room temperature is filled over the sealant to slightly above the edge of the dish. The glass plate is carefully placed on the surface, with the excess water squeezed out so that there are no bubbles underneath the plate, and water overflow is removed from off the balance.

A successful test assumes the sealant will not absorb measurable water in the short time the test is being conducted, and the weight of water recorded is all within the total volume of free space between the surface of the cured sealant and the bottom of the glass plate.

Example Calculations:

| | | | | |
|---|---|---|---|---|
| (A) | [sealant density (lbs/gal) / density of water (lbs/gal)] | = product density in g/ml | = 8.11 / 8.328 |
| (B) | [weight of wet sealant filled into dish / (A)] | = wet volume (ml) filled into dish | 5.07 / A = 5.2063 |

(continued)

| | [dish calibration (ml of water)] - (B) | = original (theoretical) void above wet sealant | |
|---|---|---|---|
| (C) | | | 5.07 / A = 5.2063 |
| (D) | DI water (g) added on top of dry sealant under glass plate - (C) | = water volume filling loss of volume due to shrinkage inside dish | |
| | (C) / (B) x 100 | = % Volume shrinkage | |

Extending from the above example calculations, [(3.09g water added to top of cured sealant in dish - (C - B)] / B x 100 = 11.26% volume shrinkage.

Or, { 3.09g (water added to top of cured sealant in dish) - [7.71g (water for calibration of dish) - 5.07g (wet sealant filled into dish) / A] } / (5.07g / A) x 100 = 11.26% volume shrinkage.

Low-shrink sealant compositions in accordance with the present disclosure generally range from 11- 12% volume shrinkage, calculated as above. In contrast, comparative conventional latex sealants range between 23 - 27% volume shrinkage, calculated as above.

The measurement method of this example also takes into account internal/structural resistance to shrinkage inherent to the formulation resulting from spherical filler packing arrangements, and is more accurate than the "channel" method.

**Example 5.** Shrinkage test results.

Shrinkage was tested according to the methods of the present disclosure. Results are shown in Table 2.

Table 2.  Shrinkage test results.

| | | | Avg. values |
|---|---|---|---|
| **Wet Testing** | | Wt/Gal density: | 8.71 |
| | | % Wt Solids: | 85.3 |
| | | % Vol Solids: | 84.7 |
| | | Skin Time for tooling (minutes): | 5 |
| | | Paint-ability Tack Free Time (minutes): | 10 |
| | | Tack Free Time (ASTM D2377): | Pass |
| | | Freeze/Thaw (-17 C) | Pass |
| | | ASTM D2203 Staining | Pass |
| | | Slump (ASTM D-2202): | 3.8mm |
| | | ASTM C1183 Extrudability | 2 g/s |
| | **QC Extrusion rate (g/15s)** | Initial: | 15 |
| | | | |
| | | 4 Weeks @ 50 C: | 17 |
| | **pH** | Initial : | 8.9 |
| | | | |
| | | 4 Weeks @ 50 C: | 8.70 |
| | **Viscosity (rheometer) cP @ 10/s** | Initial (centipoise) : | 37,400 |
| | | | |
| | | 4 Weeks @ 50 C: | 40,100 |
| **Extension -Recovery (ASTM C-736)** | | Avg. % Recovery: | pass (98.5) |
| | **Glass surface** | Adhesive Failure % | pass (< 3) |
| | | Cohesive Failure % | pass (0) |
| | **Aluminum surface** | Adhesive Failure % | pass (< 6) |
| | | Cohesive Failure % | pass (<1) |
| **Volume Shrinkage** | | % Shrinkage "petri dish method" | 11.5 |

| | ASTM C1241 % Shrinkage | 13.5 (30 max) |
|---|---|---|
| | 0.25"x0.5" wood channel % shrinkage | 12.5 |
| | Theoretical formula % shrinkage | 15.3 |
| Weathering (ASTM C-732) | 500 hrs accelerated weathering | Pass |
| | % Adhesion loss w/in channel | < 5 (25 max) |
| | Cracking/Rippling | None |
| **Low Temp. Flex after Weathering (ASTM C-734)  @ -18C:** | | Pass |

Paint-ready time is reduced substantially (up to 50% relative to other formulations) while also minimizing the possibility of paint film cracking, which often occurs when sealants with high volume shrinkage are painted too soon or with poor quality paint.

**Example 6.** Elongation and tensile property test results.

The elongations and tensile properties for inventive and comparative compositions were analyzed.

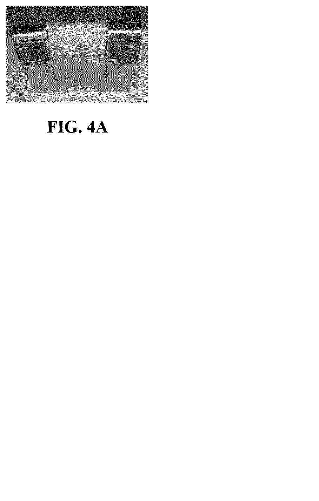

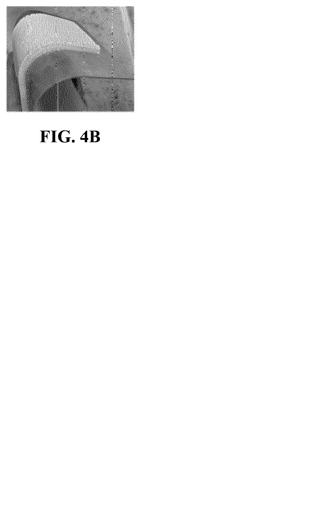

Analysis according to ASTM C734 is shown in Figures 4A-4B. This test method is for low temperature flexibility after artificial weathering of latex sealants. The composition in Figure 4A failed the test, while the composition in Figure 4B passed the test.

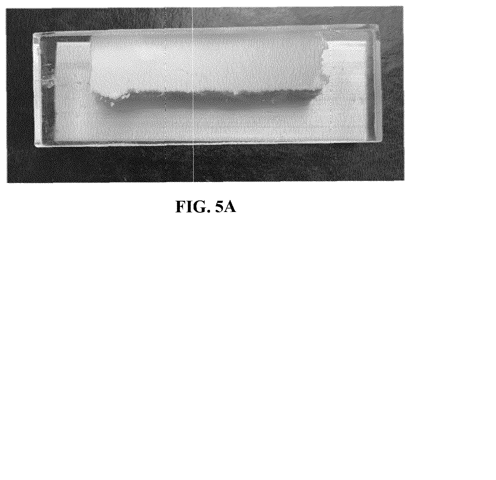

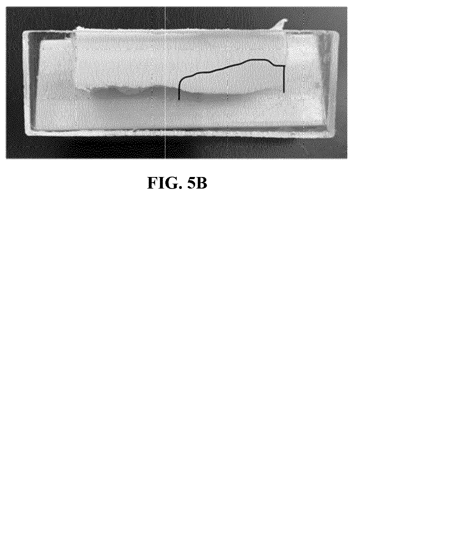

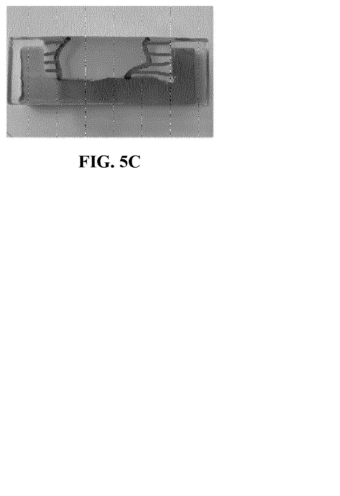

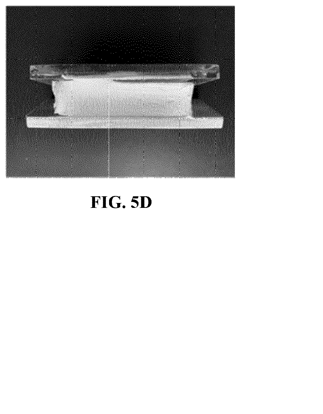

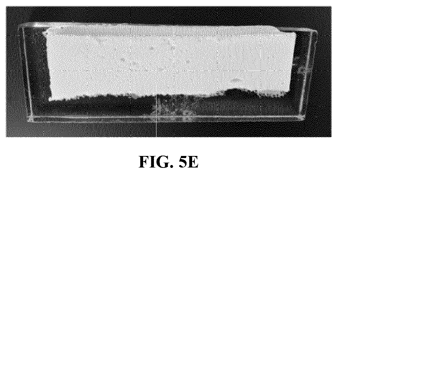

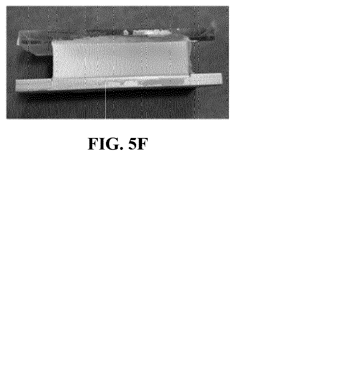

Analysis according to ASTM C736 is shown in Figures 5A-5F. This test method is for extension-recovery and adhesion of latex sealants. A sample passes the test provided that the average adhesion loss on a glass substrate and an aluminum substrate is less than 25%, even if the individual adhesion loss on the glass substrate or the aluminum substrate is greater than 25%, and if recovery from extension is 75% or greater. Figure 5A depicts 0% adhesion loss on either substrate (pass). Figure 5B depicts 75%+ adhesion loss to glass (fail). Figure 5C depicts 45-50% adhesion loss to glass and 0% adhesion loss to aluminum, with <25% total adhesion loss (pass). Figure 5D depicts a top view of 75%+ glass adhesion loss with near 0% aluminum adhesion loss (fail). Figure 5E depicts total adhesion loss on the aluminum side (fail). Figure 5F depicts a top view of a sample with 0% adhesion loss on either substrate and full recovery from extension (pass). In Figures 5B and 5C, the markings indicate adhesion loss.

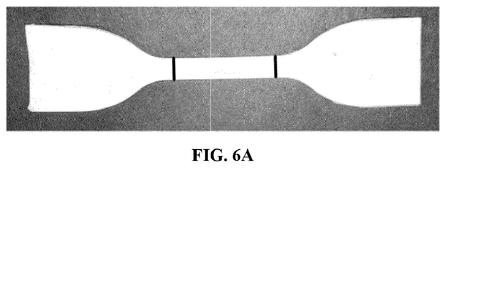

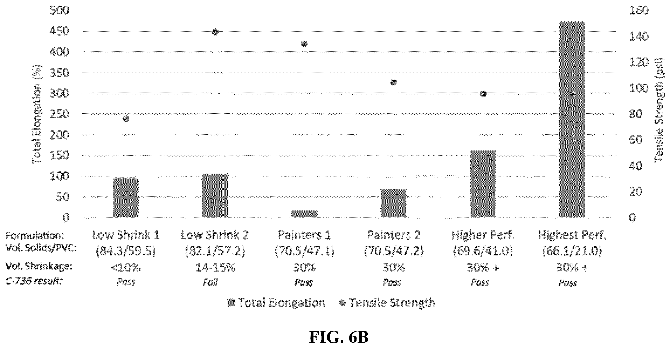

Analysis according to ASTM D-412 is shown in Figures 6A-6B. This test method is for tensile properties of elastomers. Figure 6A shows the test sample in the form of a dog bone, with a 1-inch gauge length separating the markings. Figure 6B shows the results of the test of Figure 6A.

In summary, sealant compositions have substantial benefits have been developed. The sealant compositions are low shrinkage latex sealants that exhibit under 10% volume shrinkage by some test methods. The compositions pass complete ASTM C834 testing. The compositions also exhibit 10-minute paint-ready time and have excellent application properties.

This written description uses examples to illustrate the present disclosure, including the best mode, and also to enable any person skilled in the art to practice the disclosure, including making and using any compositions or systems and performing any incorporated methods. The patentable scope of the disclosure is defined by the claims, and may include other examples that occur to those skilled in the art. Such other examples are intended to be within the scope of the claims if they have elements that do not differ from the literal language of the claims, or if they include equivalent elements with insubstantial differences from the literal language of the claims.

As used herein, the terms "comprises," "comprising," "includes," "including," "has," "having," "contains", "containing," "characterized by" or any other variation thereof, are intended to cover a non-exclusive inclusion, subject to any limitation explicitly indicated. For example, a composition, mixture, process or method that comprises a list of elements is not necessarily limited to only those elements but may include other elements not expressly listed or inherent to such composition, mixture, process or method.

The transitional phrase "consisting of" excludes any element, step, or ingredient not specified. If in the claim, such would close the claim to the inclusion of materials other than those recited except for impurities ordinarily associated therewith. When the phrase "consisting of" appears in a clause of the body of a claim, rather than immediately following the preamble, it limits only the element set forth in that clause; other elements are not excluded from the claim as a whole.

The transitional phrase "consisting essentially of" is used to define a composition or method that includes materials, steps, features, components, or elements, in addition to those literally disclosed, provided that these additional materials, steps, features, components, or elements do not materially affect the basic and novel characteristic(s) of the claimed invention. The term "consisting essentially of" occupies a middle ground between "comprising" and "consisting of".

Where an invention or a portion thereof is defined with an openended term such as "comprising," it should be readily understood that (unless otherwise stated) the description should be interpreted to also describe such an invention using the terms "consisting essentially of" or "consisting of."

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Also, the indefinite articles "a" and "an" preceding an element or component of the invention are intended to be nonrestrictive regarding the number of instances (i.e. occurrences) of the element or component. Therefore "a" or "an" should be read to include one or at least one, and the singular word form of the element or component also includes the plural unless the number is obviously meant to be singular.

As used herein, the term "about" means plus or minus 10% of the value.

As used herein, $T_g$ temperature refers to the glass transition temperature, which is the temperature at or above which a material transitions from a relatively hard and brittle "glassy" state into a relatively viscous or rubbery state.

**Claims**

1. A sealant composition comprising:

   a sealant binder composition;
   a glass filler; and
   optionally a plastic filler.

2. The sealant composition of claim 1, wherein the sealant binder composition comprises a first sealant polymer having a first $T_g$ temperature and a second sealant polymer having a second $T_g$ temperature, wherein the first $T_g$ temperature is less than the second $T_g$ temperature.

3. The sealant composition of claim 1, wherein the sealant binder composition comprises a latex polymer and optionally a non-volatile plasticizer.

4. The sealant composition of claim 1, wherein the glass filler is in the form of glass spheres.

5. The sealant composition of claim 1, wherein the glass filler is a hollow glass filler.

6. The sealant composition of claim 1, wherein the plastic filler is in the form of plastic spheres.

7. The sealant composition of claim 1, wherein the plastic filler is a hollow plastic filler.

8. The sealant composition of claim 1, wherein the sealant composition further comprises a mineral filler.

9. The sealant composition of claim 1, wherein the sealant composition further comprises an auxiliary component selected from the group consisting of rheological additives, organic thickening agents, inorganic thickening agents, adhesion promoters, pigments, dispersants, pigment dispersants, filler dispersants, detergents, non-ionic detergents, cationic detergents, anionic detergents, surfactants, non-ionic surfactants, cationic surfactants, anionic surfactants, biocides, mildew growth inhibitors, plasticizers, oils, process oils, freeze-thaw additives, volatile freeze-thaw additives, non-volatile freeze-thaw additives, pH modifiers, volatile pH modifiers, non-volatile pH modifiers, buffers, and combinations thereof.

10. The sealant composition of claim 1, wherein the sealant composition exhibits a volume shrinkage less than about 30% upon drying.

11. A method of making a sealant composition comprising:

a sealant binder composition;
a glass filler; and
optionally a plastic filler,

wherein the method comprises

forming a mixture comprising the sealant binder composition, the glass filler, and optionally the plastic filler; and mixing the mixture.

12. The method of claim 11, wherein the sealant binder composition comprises a first sealant polymer having a first $T_g$ temperature and a second sealant polymer having a second $T_g$ temperature, wherein the first $T_g$ temperature is less than the second $T_g$ temperature.

13. The method of claim 11, wherein the sealant composition further comprises an auxiliary component selected from the group consisting of rheological additives, organic thickening agents, inorganic thickening agents, adhesion promoters, pigments, dispersants, pigment dispersants, filler dispersants, detergents, non-ionic detergents, cationic detergents, anionic detergents, surfactants, non-ionic surfactants, cationic surfactants, anionic surfactants, biocides, mildew growth inhibitors, plasticizers, oils, process oils, freeze-thaw additives, volatile freeze-thaw additives, non-volatile freeze-thaw additives, pH modifiers, volatile pH modifiers, non-volatile pH modifiers, buffers, and combinations thereof.

14. The method of claim 11, wherein the sealant composition exhibits a volume shrinkage less than about 30% upon drying.

15. A method of using a sealant composition comprising:

a sealant binder composition;
a glass filler; and
optionally a plastic filler,

wherein the method comprises applying the sealant composition to a work surface.

16. The method of claim 15, wherein the work surface is selected from the group consisting of a surface in a building and/or construction application, a surface in an interior trim work application, a wall, a floor, a ceiling, a door, a window, a gap therebetween, and combinations thereof.

17. The method of claim 15, wherein the work surface comprises a material selected from the group consisting of glass, ceramic tile, porcelain tile, ceramic and porcelain tile, concrete, aluminum, plastic, polyvinyl chloride (PVC), wood, drywall, and combinations thereof.

18. The method of claim 15, wherein the sealant binder composition comprises a first sealant polymer having a first $T_g$ temperature and a second sealant polymer having a second $T_g$ temperature, wherein the first $T_g$ temperature is less than the second $T_g$ temperature.

19. The method of claim 15, wherein the sealant composition further comprises an auxiliary component selected from the group consisting of rheological additives, organic thickening agents, inorganic thickening agents, adhesion promoters, pigments, dispersants, pigment dispersants, filler dispersants, detergents, non-ionic detergents, cationic detergents, anionic detergents, surfactants, non-ionic surfactants, cationic surfactants, anionic surfactants, biocides, mildew growth inhibitors, plasticizers, oils, process oils, freeze-thaw additives, volatile freeze-thaw additives, non-volatile freeze-thaw additives, pH modifiers, volatile pH modifiers, non-volatile pH modifiers, buffers, and combinations thereof.

20. The method of claim 15, wherein the sealant composition exhibits a volume shrinkage less than about 30% upon drying.

EP 4 155 362 A1

**FIG. 1A**

18

**FIG. 1B**

**FIG. 1C**

FIG. 2

100

104     102

106

108

**FIG. 3A**

**FIG. 3B**

**FIG. 3C**

**FIG. 3D**

**FIG. 4A**

**FIG. 4B**

**FIG. 5A**

**FIG. 5B**

**FIG. 5C**

**FIG. 5D**

**FIG. 5E**

**FIG. 5F**

**FIG. 6A**

| Formulation:<br>Vol. Solids/PVC: | Low Shrink 1<br>(84.3/59.5) | Low Shrink 2<br>(82.1/57.2) | Painters 1<br>(70.5/47.1) | Painters 2<br>(70.5/47.2) | Higher Perf.<br>(69.6/41.0) | Highest Perf.<br>(66.1/21.0) |
|---|---|---|---|---|---|---|
| Vol. Shrinkage: | <10% | 14-15% | 30% | 30% | 30% + | 30% + |
| C-736 result: | Pass | Fail | Pass | Pass | Pass | Pass |

■ Total Elongation  ● Tensile Strength

**FIG. 6B**

Europäisches
Patentamt

European
Patent Office

Office européen
des brevets

# EUROPEAN SEARCH REPORT

Application Number

EP 22 19 6974

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/107354 A1 (YAMABE TAKUJIRO [JP] ET AL) 20 April 2017 (2017-04-20) <br><br> * paragraphs [0036], [0042]; claims; examples * <br> ----- | 1,4,5, 9-11, 13-15, 19,20 | INV. <br> C09K3/10 <br> C09J133/06 <br> C08K7/28 <br> C08K7/20 |
| X | WO 91/07473 A1 (AIRSEAL PTY LIMITED [AU]) 30 May 1991 (1991-05-30) <br> * page 4; claims; example 1 * <br> * pages 6,8 * <br> * page 15 * <br> ----- | 1-5,9-20 | |
| X,D | US 4 388 424 A (KENNELL SAMUEL C ET AL) 14 June 1983 (1983-06-14) | 1,4,5, 8-11, 13-15, 19,20 | |
| A | * claims; example 1 * <br> ----- | 6,7 | |
| X | US 2014/083038 A1 (NEGRI ROBERT H [US] ET AL) 27 March 2014 (2014-03-27) <br><br> * paragraph [0091]; claims 1-5 * <br> ----- | 1,4,5, 9-11, 13-17, 19,20 | TECHNICAL FIELDS SEARCHED (IPC) <br><br> C09K <br> C08K <br> C08L |

The present search report has been drawn up for all claims

| Place of search | Date of completion of the search | Examiner |
|---|---|---|
| Munich | 19 January 2023 | Masson, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 6974

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2023

| Patent document cited in search report | | Publication date | Patent family member(s) | | Publication date |
|---|---|---|---|---|---|
| US 2017107354 | A1 | 20-04-2017 | CN | 106133103 A | 16-11-2016 |
| | | | EP | 3126465 A1 | 08-02-2017 |
| | | | JP | 6594894 B2 | 23-10-2019 |
| | | | JP | 2015196817 A | 09-11-2015 |
| | | | JP | 2017512872 A | 25-05-2017 |
| | | | KR | 20160142312 A | 12-12-2016 |
| | | | US | 2017107354 A1 | 20-04-2017 |
| | | | WO | 2015153330 A1 | 08-10-2015 |
| WO 9107473 | A1 | 30-05-1991 | WO | 9107473 A1 | 30-05-1991 |
| | | | ZA | 909270 B | 25-09-1991 |
| US 4388424 | A | 14-06-1983 | NONE | | |
| US 2014083038 | A1 | 27-03-2014 | AR | 092678 A1 | 29-04-2015 |
| | | | AU | 2013323720 A1 | 07-05-2015 |
| | | | BR | 112015005932 A2 | 04-07-2017 |
| | | | CA | 2884947 A1 | 03-04-2014 |
| | | | CL | 2015000739 A1 | 07-08-2015 |
| | | | CN | 104684986 A | 03-06-2015 |
| | | | DK | 2900752 T3 | 13-09-2021 |
| | | | EP | 2900752 A1 | 05-08-2015 |
| | | | JP | 5905650 B2 | 20-04-2016 |
| | | | JP | 2015537058 A | 24-12-2015 |
| | | | KR | 20150051235 A | 11-05-2015 |
| | | | LT | 2900752 T | 11-10-2021 |
| | | | MX | 355230 B | 10-04-2018 |
| | | | NZ | 706683 A | 27-07-2018 |
| | | | PE | 20151170 A1 | 02-09-2015 |
| | | | PL | 2900752 T3 | 22-11-2021 |
| | | | TW | 201412681 A | 01-04-2014 |
| | | | UA | 117918 C2 | 25-10-2018 |
| | | | US | 2014083038 A1 | 27-03-2014 |
| | | | WO | 2014052349 A1 | 03-04-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63247089

- US 4388424 A